# FASCICULE DE BREVET EUROPEEN

(11) **EP 2 810 825 B1**
(45) Date de publication et mention de la délivrance du brevet: **05.08.2015**
(21) Numéro de dépôt: 14165077.0
(22) Date de dépôt: 17.04.2014
(51) Int. Cl.: B60R 1/00, B60R 11/04, B60P 3/00, B65F 3/00

(54) **Dispositif de vision arrière pour un véhicule**
Vorrichtung zum Rückwärtssehen für ein Kraftfahrzeug
Rear-viewing device for a vehicle

(30) Priorité: 04.06.2013 FR 1355130
(43) Date de publication de la demande: 10.12.2014
(73) Titulaire: Sita Sud-Ouest, 33610 Canejan (FR)
(72) Inventeur: Goumard, Daniel, 16300 Lamerac (FR)
(74) Mandataire: Novagraaf Technologies

(56) Documents cités:
- EP-A1- 0 623 494
- EP-A1- 2 028 138
- WO-A1-2011/014903
- DE-A1-102008 039 136
- US-A- 4 214 266

## Description

### DOMAINE TECHNIQUE DE L'INVENTION

La présente invention concerne un véhicule de type camion, en particulier de type poids-lourds de collecte pour la collecte de déchets ménagers.

### ETAT DE LA TECHNIQUE ANTERIEURE

La problématique de la vision arrière des véhicules poids-lourds de collecte, et notamment la problématique d'évitement de collision avec un éventuel obstacle qui serait situé derrière un tel véhicule, connait déjà plusieurs solutions, voir par exemple EP 2 028 138.

A ce titre, sont généralement connus la présence d'une ou plusieurs caméra(s) fixe(s) installée(s) à l'arrière d'un tel véhicule et dont le conducteur peut prendre connaissance grâce à une image visualisée par la ou les dite(s) caméra(s) en la consultant sur un ou plusieurs écran(s) situé(s) dans la cabine du conducteur.

Ceci présente notamment l'avantage de pouvoir offrir un champ de vue plus important qu'avec un rétroviseur central, d'autant plus qu'un tel rétroviseur central n'est pas prévu dans le cas où il n'est pas possible de voir au travers d'une partie arrière d'un camion comme par exemple une benne, une remorque ou un container.

Les caméras peuvent être par exemple enclenchées par le passage de la marche arrière dudit véhicule.

Selon un autre mode de réalisation connu, la caméra peut être mobile, et la marche arrière peut enclencher son mouvement vers le bas de sorte à ce que le conducteur puisse voir aux abords du véhicule lors d'une marche arrière et en particulier au voisinage du pare-choc arrière.

Néanmoins, de tels dispositifs de vision arrière ont notamment l'inconvénient de présenter un champ de vue trop restreint pour le conducteur pour assurer la sécurité des personnes proches du véhicule lors de toute manoeuvre. La zone de visualisation est en effet généralement au voisinage du pare-choc arrière du véhicule, ceci étant destiné aux manoeuvres dites « de parking » pour permettre au conducteur de garer le véhicule, et/ou au contrôle visuel des opérateurs par le conducteur lorsqu'ils se tiennent sur leur plateforme de transport solidaire du véhicule et/ou lorsqu'ils se tiennent directement devant l'ouverture de collecte des déchets à l'arrière du véhicule.

Par ailleurs, dans le cas par exemple où le véhicule est un véhicule de type poids-lourd de collecte, notamment pour la collecte de déchets ménagers, une ou plusieurs personnes sont alors présentes dans une zone de travail située juste à l'arrière du véhicule, au niveau de la trémie de chargement. Lorsque le véhicule doit collecter des déchets, celui-ci est soit à l'arrêt, soit effectue des manoeuvres, ceci pendant que les opérateurs positionnent les poubelles pour leur prise en charge par des bras de préhension du camion ou collectent manuellement les déchets pour les placer directement dans la benne.

Ainsi, lors des collectes, les manoeuvres sont très nombreuses et se traduisent par l'obligation de réaliser des marches-arrière de positionnement. Lors des marches-arrière, la zone située derrière le véhicule, dans le prolongement de celui-ci, constitue un angle-mort. Ni les rétroviseurs extérieurs ni la caméra de travail ne permettent actuellement d'appréhender les obstacles et/ou les usagers tiers éventuellement présents dans cette zone.

Bien que les poids-lourds soient munis de dispositifs émettant des signaux sonores lors de l'enclenchement de la marche arrière, cela ne permet pas d'offrir aux opérateurs une sécurité maximale pour travailler.

Une autre solution triviale consiste aussi en l'installation de plusieurs caméras autour du véhicule avec différents écrans dans la cabine, mais là encore une telle solution n'est pas adaptée. En effet, l'homme du métier qui voudrait améliorer le contrôle de la sécurité par le conducteur autour d'un tel véhicule n'augmenterait pas le nombre de caméras et d'écrans à contrôler par le conducteur pour éviter de diviser et ainsi diminuer son attention.

Il existe donc un réel besoin de trouver une solution facile à mettre en oeuvre, pour répondre efficacement au problème de vision arrière de tels véhicules, et en particulier pour permettre une vision élargie, rapide, précise et complète de l'environnement à l'arrière d'un véhicule par son conducteur, ceci afin d'assurer la sécurité des personnes situées à proximité quelque soient les manoeuvres effectuées par le véhicule.

### EXPOSE DE L'INVENTION

L'invention vise à remédier à tout ou partie des inconvénients de l'état de la technique, en particulier au problème de vision arrière élargie pour un véhicule, notamment de type camion.

Selon un premier aspect, l'invention concerne un dispositif de vision arrière pour un véhicule de type camion, apte à être disposé à l'arrière du véhicule, le dispositif de vision arrière étant caractérisé en ce qu'il comprend au moins un moyen d'observation et des moyens de déplacement du moyen d'observation entre une position basse et une position haute :
- la position basse où le moyen d'observation est orienté vers le bas ;
- la position haute commandée par un circuit apte à être relié à une marche arrière d'un véhicule, la position haute correspondant à une position dans laquelle le moyen d'observation est orienté plus haut que la position basse.

Un tel dispositif de vision arrière permet ainsi une vision élargie de la zone arrière du véhicule dans laquelle les opérateurs travaillent, celle-ci étant en position haute au passage d'une marche arrière.

En effet, à l'inverse des dispositifs connus, la marche arrière commande l'élévation de la scène à observer par le conducteur, à savoir le déplacement de la position basse du moyen d'observation à sa position haute.

Avantageusement, les moyens d'observation comprennent une caméra et un écran. De préférence, l'écran est placé dans la cabine du conducteur de sorte qu'à tout moment, à l'arrêt ou pendant une manoeuvre, le conducteur, via par exemple l'écran en cabine, peut s'assurer de la position de son ou ses équipier(s) de collecte et du travail réalisé. De préférence encore, le moyen d'observation comprend une seule caméra.

Selon une caractéristique technique particulière, les moyens de déplacement comprennent au moins un vérin.

Ainsi, en fonction de la position du vérin, et en particulier de son élongation, celui-ci pourra amener le moyen d'observation dans sa position basse ou haute. De préférence encore, le vérin est actionné par un moteur.

Par exemple, le moyen d'observation peut être en position haute lorsque le vérin est dans une position déployée, et dans une position basse lorsque le vérin est dans une position rétractée.

Avantageusement encore, le dispositif de vision arrière comprend un support, les moyens de déplacement permettant le déplacement dudit support sur lequel est fixé le moyen d'observation.

Un tel agencement permet de commander le déplacement des moyens d'observations tout en assurant, via le support, sa fixation solide au véhicule.

Dans un mode de réalisation préféré, le dispositif de vision arrière présente au moins un éclairage disposé sur le support de sorte que les moyens de déplacement permettent le déplacement concomitant du moyen d'observation et de l'éclairage.

Une telle configuration permet de commander la mobilité du moyen d'observation, l'éclairage suivant alors le mouvement dudit moyen d'observation de sorte à ce que l'image visualisée par la caméra soit toujours exploitable même lorsque la lumière environnante est faible ou qu'il fait nuit. De cette manière, la caméra pourra, quelque soit son mouvement visualiser une zone lumineuse, quelque soit la luminosité environnante, ceci permettant d'accroitre la sécurité des opérateurs à l'arrière du véhicule même lorsqu'il fait nuit.

Avantageusement encore, les moyens de déplacement permettent la rotation horizontale du moyen d'observation par rapport au véhicule.

Selon un autre aspect, l'invention concerne aussi un véhicule du type camion, notamment un camion pour le ramassage d'ordures ménagères, caractérisé en ce qu'il comprend un dispositif de vision arrière tel que décrit précédemment.

Selon une caractéristique particulière, la position haute du moyen d'observation permet d'observer une région arrière du véhicule éloignée d'au moins 2 m, et de préférence éloignée d'au moins 2,5 m.

En effet, dans l'art antérieur, et en marche-arrière, le conducteur ne voit pas un usager ou un obstacle situé à plus de 2m de l'arrière du véhicule, les rétroviseurs ne le permettent pas non plus.

Dans notre cas, et en marche arrière, une telle zone peut être observée, améliorant la sécurité lors des manoeuvres du véhicule.

Avantageusement, une zone de travail située directement à l'arrière du véhicule est visible par le moyen d'observation à la fois en position basse et en position haute, et de préférence dans toutes positions entre la position basse et la position haute.

En d'autres termes, une zone couverte par le moyen d'observation en position haute comme en position basse, en marche arrière comme en marche avant, permet de toujours visualiser une zone de travail située directement à l'arrière du véhicule.

Le vocable « directement à l'arrière du véhicule » désigne une zone distante au plus de 0,5m de l'arrière du véhicule. Il s'agit donc d'une zone proche du véhicule, au moins assez proche pour observer si une personne s'y trouve.

De cette manière, et lorsqu'il s'agit en particulier d'un véhicule de type camion destiné à la collecte de déchets ménagers :
- que le véhicule soit à l'arrêt tandis que des opérateurs positionnent les poubelles pour leur prise en charge par des bras de préhension du camion ou collectent manuellement les déchets pour les placer directement dans une benne ; ou
- que le véhicule roule, tandis que les opérateurs se tiennent debout sur des plateformes,
le conducteur pourra observer et contrôler à chaque instant si une personne se trouve sur l'une des plateformes ou directement devant un trémie de chargement des déchets, la position haute permettant en outre, en marche arrière, de visualiser également la présence d'une personne située à l'arrière du véhicule, à plus de 2m.

Avantageusement, le véhicule comprend une benne située à l'arrière du véhicule, le dispositif de vision arrière étant fixé à la benne de sorte que le moyen d'observation est situé à l'arrière de la benne ou au dessus de l'arrière de la benne.

Avantageusement encore, le véhicule comprend un écran pour l'utilisateur, le conducteur. Par ailleurs, dans le cas où le véhicule comprend une pluralité de moyens d'observations, à savoir deux ou plus, par exemple des caméras, le véhicule comprend de préférence toujours un seul écran. Selon un mode de réalisation, le passage de la marche arrière entraine l'affichage du moyen d'observation.

En effet, le conducteur a déjà cinq rétroviseurs et un écran à surveiller, un tel agencement permet d'éviter d'installer un moniteur ou écran supplémentaire. Par ailleurs certains véhicules sont équipés de moyens d'observations autres que ceux destinés à la vision arrière dudit véhicule, et par exemple à la vision avant. Dans ce cas le véhicule peut présenter deux caméras, l'une étant destinée à la vision arrière, l'autre à la vision avant et le conducteur peut visualiser leurs images sur un seul écran.

Ainsi, quelque soit le nombre de caméras, le conducteur peut visualiser l'ensemble des images sur un seul et même écran. Ceci permet une meilleure surveillance des zones à risques et assure alors une sécurité optimale.

### BREVE DESCRIPTION DES FIGURES

D'autres caractéristiques et avantages de l'invention ressortiront à la lecture de la description qui suit, en référence aux figures annexées, qui illustrent :
- figure 1, une vue en perspective de l'arrière d'un véhicule de type camion, lequel est muni d'un dispositif de vision arrière selon un mode de réalisation ;
- figures 2A et 2B, des vues de profil d'un dispositif de vision arrière selon un mode de réalisation, le moyen d'observation étant dans une position basse (figure 2A) et dans une position haute (figure 2B) ;
- figures 3A et 3B, des vues de profil d'un dispositif de vision arrière selon un autre mode de réalisation, le moyen d'observation étant dans une position basse (figure 3A) et dans une position haute (figure 3B) ;
- figures 4A et 4B, des vues de profil perspective de l'arrière d'un véhicule de type camion, lequel est muni d'un dispositif de vision arrière selon un mode de réalisation, le moyen d'observation étant dans une position basse (figure 4A) et dans une position haute (figure 4B) ;
- figures 5A et 5B, des vues de dessus d'un véhicule de type camion, lequel est muni d'un dispositif de vision arrière selon ce mode de réalisation, le moyen d'observation étant dans une position basse (figure 5A) et dans une position haute (figure 5B).

Pour plus de clarté, les éléments identiques ou similaires sont repérés par des signes de référence identiques sur l'ensemble des figures.

### DESCRIPTION DETAILLEE D'UN MODE DE REALISATION

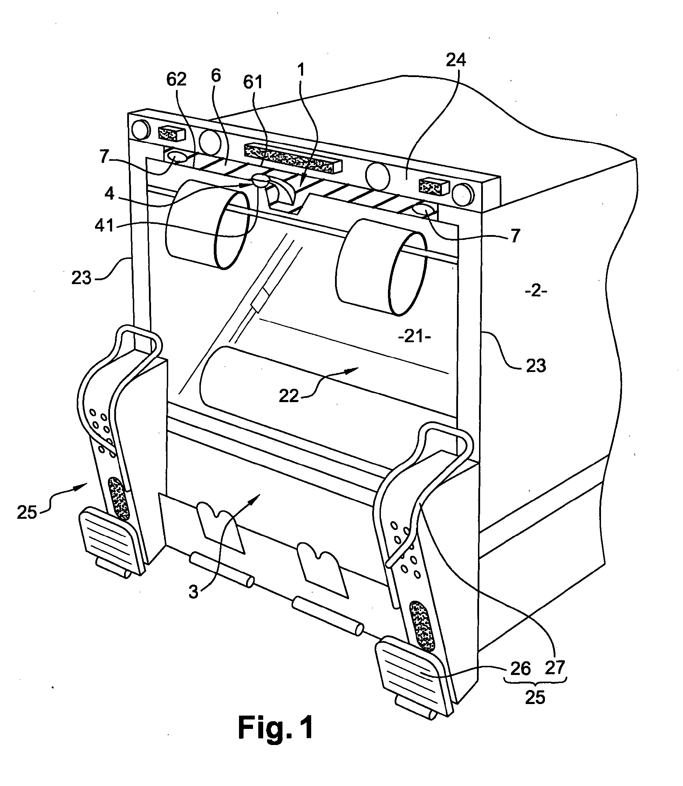

La figure 1 montre une vue en perspective de l'arrière d'un véhicule de type camion, lequel est muni d'un dispositif de vision arrière 1 selon un mode de réalisation.

Le véhicule illustré est un camion ou poids lourd de collecte, destiné à la collecte et au ramassage des déchets ménagers.

Le véhicule 2 est muni d'une benne 21 pour y placer les déchets, laquelle est placée derrière une cabine (non représentée sur la figure 1), la cabine étant l'avant du véhicule. La benne 21 présente une ouverture 22 de collecte prévue à l'arrière dudit véhicule pour y insérer lesdits déchets collectés, cette ouverture 22 de collecte est en particulier délimitée latéralement par les parois latérales 23 de la benne 21 et par un montant supérieur 24 solidaire de la paroi supérieure de la benne 21.

A l'arrière 3 du véhicule 2 et de part et d'autre de l'ouverture 22, sont prévus des moyens de transport 25 des opérateurs pour la collecte des déchets, ces moyens de transports 25 comprenant chacun une plateforme 26 de sorte à ce que les opérateurs puissent s'y tenir en position debout, et une barre de sécurité 27, de sorte à ce qu'ils puissent s'y maintenir lorsque le véhicule les transporte.

Par ailleurs, le véhicule comprend un dispositif de vision arrière 1 disposé à l'arrière 3 du véhicule 2, le dispositif de vision arrière 1 comprenant un moyen d'observation 4 et des moyens de déplacement 5 (non illustré sur cette figure 1) du moyen d'observation 4 entre une position basse et une position haute :
- la position basse correspondant à une position dans laquelle le moyen d'observation 4 est orienté vers le bas ;
- la position haute commandée par un circuit apte à être relié à une marche arrière d'un véhicule 2, la position haute correspondant à une position dans laquelle le moyen d'observation 4 est orienté plus haut que la position basse.

Les moyens d'observation 4 comprennent ici une caméra 41, cette caméra étant relié à un écran d'observation (non représenté) situé à l'avant du véhicule 2, dans la cabine, et destiné à être contrôlé par le conducteur dudit véhicule 2.

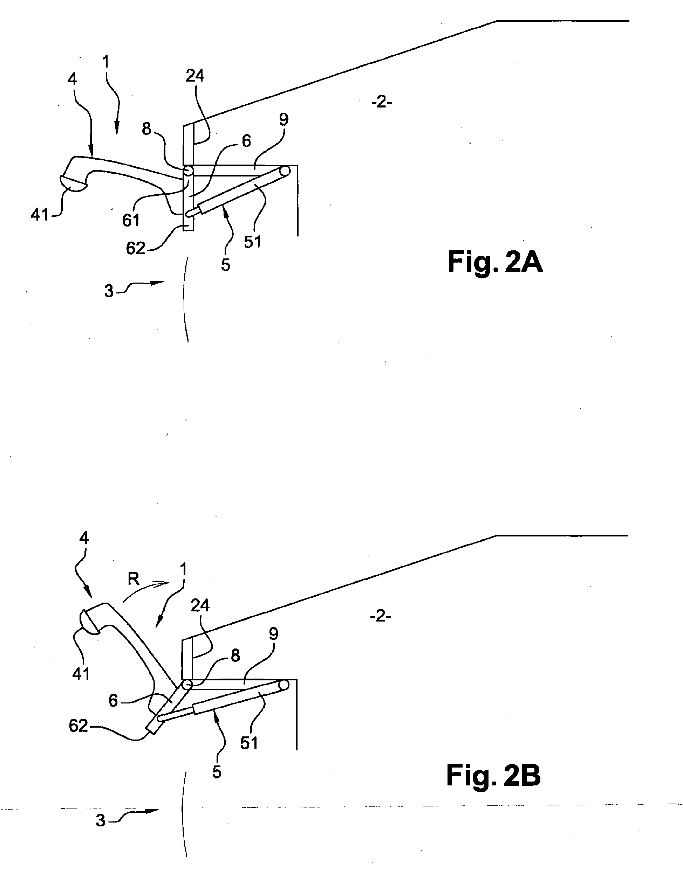

La caméra 41 est ici fixée sur un support 6, lequel s'étend suivant la largeur de l'ouverture 22 de collecte. Le support 6 présente une forme de plaque et présente en outre un bord supérieur 61 et un bord inférieur 62, ledit support 6 étant fixé au véhicule 2 au moyen de charnières 8, ces charnières assurant plus précisément la liaison pivot ou l'articulation entre le bord supérieur 61 du support 6 et le montant supérieur 24 à l'arrière 3 du véhicule 2 (voir figures 2A et 2B).

Selon d'autres alternatives non représentées, le support peut être de formes différentes, par exemple sous forme de cadre ou de toute conception lui permettant d'assurer sa fonction.

Les moyens de déplacement 5, non illustrés sur cette figure, permettent le déplacement dudit support 6 sur lequel est fixée la caméra 41, ce déplacement suivant alors, grâce aux charnières 8, un mouvement de rotation. Le support 6 s'étendant suivant la largeur du véhicule, et la charnière 8 étant sensiblement horizontale par rapport au sol S, la rotation est une rotation horizontale.

En outre, des éclairages 7 sont situés sur ledit support 6, ces éclairages 7 permettent de pouvoir éclairer la zone à observer par la caméra 41. Les éclairages 7 étant solidaires du support et la caméra 41 étant elle-même solidaire du support, il en résulte que le déplacement du support entrainera de manière concomitante le déplacement de la caméra 41 et des éclairages 7. De préférence ces éclairages sont alimentés par le circuit relié à la marche arrière qui commande la position haute de la caméra 41 mais peuvent aussi être alimenté de façon indépendante.

Dans ce mode de réalisation, deux éclairages 7 sont disposés de part et d'autre, latéralement, de la caméra 41, à des extrémités de cedit support 6, et à une même hauteur que ladite caméra 41. Ces éclairages 7 éclairent la zone balayée par la caméra 41. Ce sont ici des éclairages à LED.

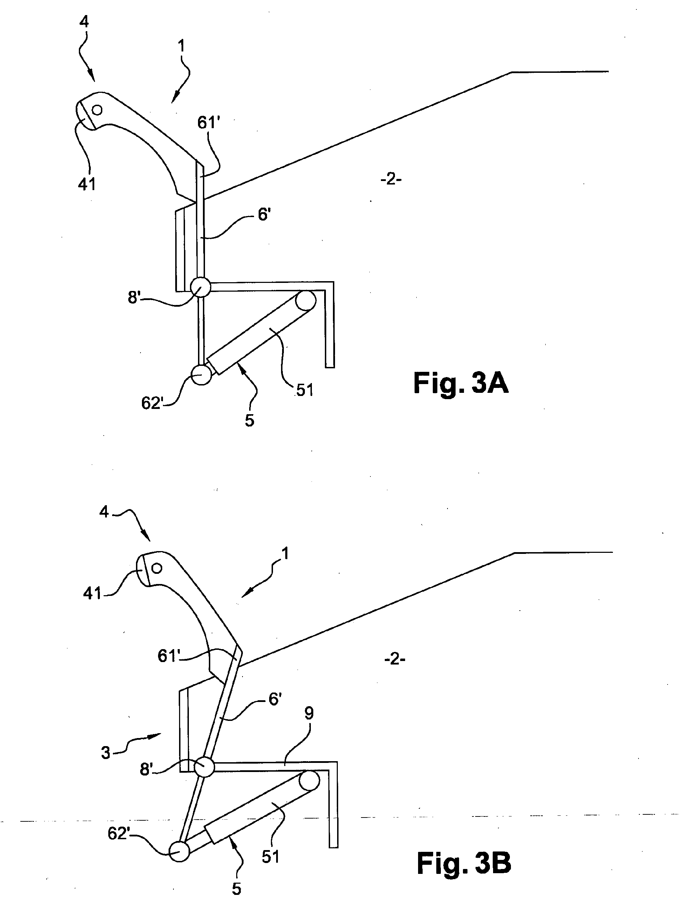

Les moyens de déplacement 5 et le mouvement qu'ils procurent à la caméra sont en particulier illustrés figure 2A, 2B, 3A et 3C.

En effet, les figures 2A et 2B montrent deux vues de profil d'un dispositif de vision arrière selon un mode de réalisation, le moyen d'observation étant dans une position basse (figure 2A) et dans une position haute (figure 2B).

La caméra 41 est solidaire du support 6. La charnière 8 permet la liaison pivot entre le bord supérieur 61 du support 6 et le montant supérieur 24 à l'arrière 3 du véhicule 2. Les moyens de déplacement 5 comprennent ici un vérin 51 fixé, à une première extrémité, à une base 9 fixe par rapport au véhicule 2 et, à une deuxième extrémité, au support 6, au voisinage de son bord inférieur 62.

Ainsi, en fonction de l'élongation du vérin 51, à savoir de la variation de la distance entre sa première extrémité et sa deuxième extrémité, celui-ci pourra amener le moyen d'observation 4 dans sa position basse ou haute en exerçant une contrainte sur le support 6 au voisinage de son bord inférieur 62 entrainant alors une rotation du support 6 grâce à la charnière 8 en liaison pivot avec le véhicule 2.

Le vérin 51 peut être de tout type, par exemple un vérin pneumatique, hydraulique ou électrique (par exemple de type vis sans fin) pour rendre mobile le support de la caméra.

La distance entre la charnière 8 et la liaison mécanique entre le vérin 51 et le support 6 pourra être choisi de sorte à assurer au support 6 une rotation d'amplitude plus ou moins grande. Ainsi, plus cette distance est petite, et plus l'amplitude du mouvement de rotation sera grande.

Sur les figures 2, le moyen d'observation 4 est dans une position basse lorsque le vérin est dans une position rétractée (figure 2A) et dans une position haute lorsque le vérin est dans une position déployée (figure 2B), la rotation effectuée par la caméra 41 lors de ce mouvement est indiquée par une flèche R.

De préférence, et comme illustré figures 2A et 2B, la première extrémité du vérin 51 est liée à la base 9, et est situé, selon un axe verticale, au même niveau que la charnière 8. En d'autre terme, l'axe de rotation du support 6 par rapport au véhicule 2, et l'axe de rotation du vérin 51 par rapport au véhicule 2 sont situés à une même hauteur.

Les figures 3A et 3B montrent également deux vues de profil d'un dispositif de vision arrière mais selon un autre mode de réalisation, le moyen d'observation étant dans une position basse sur la figure 3A et dans une position haute sur la figure 3B.

Le mode de réalisation illustré dans ces figures 3A et 3B diffèrent du mode de réalisation illustré dans les figures 2A et 2B principalement en ce que la deuxième extrémité du vérin est fixée à un support formant levier 6' dont une extrémité supérieure 61' porte la caméra 41, la deuxième extrémité du vérin 51 étant fixée à l'extrémité inférieure du levier 6', ledit support formant levier 6' présentant entre ses extrémités inférieure 61' et supérieure 62', un moyen de liaison formant charnière 8' (voir figures 3A et 3B).

Dans ces deux modes de réalisation le support 6, 6' est articulé, assurant la rotation de la caméra 41 par rapport au véhicule.

Le moyen d'observation fait ici sailli au dessus du véhicule 2, en particulier par rapport à la paroi supérieure de la benne 21, à travers un orifice de ladite paroi supérieure.

En outre, dans ce mode de réalisation, le moyen d'observation 4 est également dans une position basse lorsque le vérin est dans une position rétractée (figure 3A) et dans une position haute lorsque le vérin est dans une position déployée (figure 3B). Le vérin se situe alors au dessous de son axe de rotation.

Dans un mode de réalisation alternatif, le fonctionnement inverse peut être envisagé, à savoir que le moyen d'observation est dans une position basse lorsque le vérin est dans une position déployée et dans une position haute lorsque le vérin est dans une position rétractée, le vérin sera alors positionné dans ce cas au dessus de l'axe de rotation.

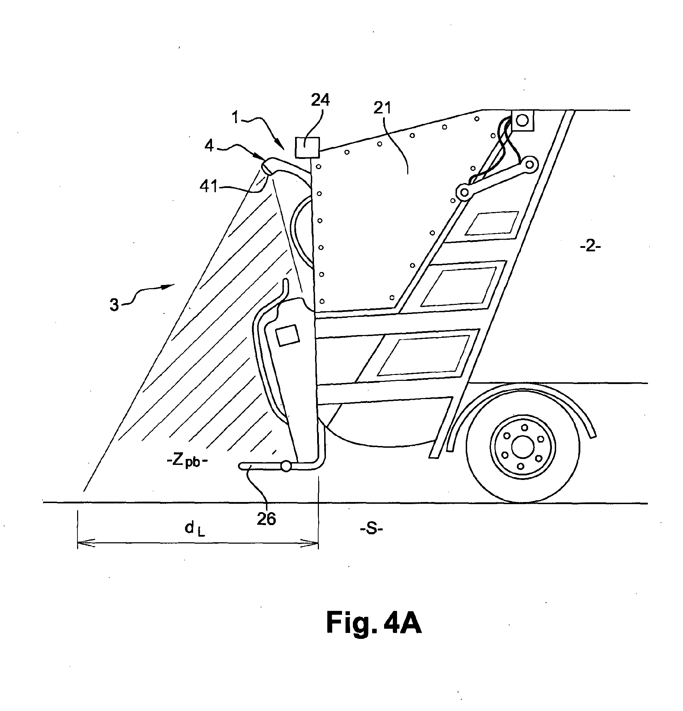

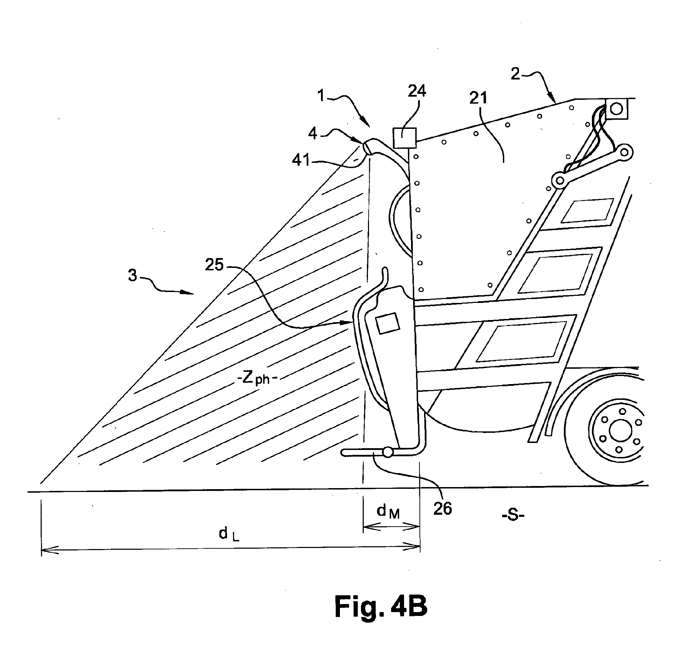

Par ailleurs, les figures 4A et 4B montrent des vues de profil de l'arrière d'un véhicule, lequel est muni d'un dispositif de vision arrière selon un mode de réalisation, le moyen d'observation étant dans une position basse (figure 4A) et dans une position haute (figure 4B). Dans ces vues le dispositif de vision arrière 1 est celui illustré dans les figures 1, 2A et 2B.

Est en particulier illustré dans ces figures :
- une zone Zpb couverte par la caméra 41 en position basse (figure 4A) ; et
- une zone Zph couverte par la caméra 41 en position haute (figure 4B);
ces zones étant illustrées dans ces figures par des hachures.

Plus précisément la zone couverte par la caméra 41, ou zone d'observation observée par ladite caméra 41, s'étend au sol S de l'arrière du véhicule jusqu'à une distance limite d_{L} de l'arrière 3 du véhicule 2, laquelle est éloignée du véhicule 2 suivant cet axe longitudinal. Dans cette position basse, une partie de l'arrière du véhicule est également couverte, de sorte que le conducteur peut aussi contrôler l'ouverture de la benne 21 et les plateformes 26.

Cette zone couverte varie entre la position basse et la position haute par la rotation de ladite caméra 41. Cette rotation est ici sensiblement égale à 30 degrés. Plus généralement et de préférence, cette rotation pourra varier entre 20 et 50 degrés.

En position basse, la caméra 41 permet ainsi d'observer une zone au sol S située de l'arrière 3 du véhicule 2, couvrant au moins en partie l'arrière dudit véhicule et s'en éloignant longitudinalement jusqu'à une distance limite d_{L}, sensiblement égale à 2,5m.

Plus généralement, et de préférence, la distance limite d_{L} de la zone couverte Zpb par la caméra 41 en position basse est sensiblement comprise entre 2m et 3m.

En position haute, il est possible de voir jusqu'un une distance plus éloignée qu'en position basse de la caméra 41, c'est à dire que la distance limite d_{L} de la zone couverte Zph par la caméra 41 en position haute est plus grande que la distance limite d_{L} de la zone couverte Zpb par la caméra 41 en position basse. Ici, et en position haute, la distance limite d_{L} est sensiblement égale à 7,5m.

Plus généralement, et de préférence, la distance limite d_{L} de la zone couverte Zph par la caméra 41 en position haute est au moins égale à 5m.

Cette distance limite d_{L} peut varier en fonction de plusieurs paramètres, en particulier de son positionnement angulaire prédéterminé lors de l'installation du moyen d'observation 4 sur le véhicule 2, de l'angle de rotation de la caméra 41 entre la position basse et la position haute, mais également de la hauteur de la caméra par rapport au sol S.

Ainsi, en respectant un angle de rotation d'environ 30 degrés, et en position haute, la caméra 41 filme une zone s'étendant des plateformes 26 à l'arrière du véhicule 2 jusqu'à distance limite d_{L} d'environ 7,5 à 9m. Dans la configuration telle qu'illustrée figures 3B, c'est-à-dire lorsque le moyen d'observation, ici la caméra 41, fait saillie au dessus du véhicule 2, la zone d'observation, ou zone couverte Zph, peut s'étendre jusqu'à environ 10 m.

En outre, la distance minimale d_{M} par rapport à l'arrière 3 du véhicule 2 en position haute de la caméra 41 est ici inférieure à 0,5m, de sorte qu'il soit encore possible pour l'observateur, ici le conducteur, de pouvoir observer et contrôler si une personne se trouve sur l'une des plateformes 26 ou directement devant l'ouverture 22 de collecte.

De cette manière, quelque soit la position basse ou haute de la caméra 41, la distance minimale d_{M} de la zone observée par rapport à l'arrière 3 du véhicule 2 se trouve toujours inférieure à 0,5m ce qui permet de voir toute personne qui serait située aux abords du véhicule.

Cette position haute est commandée par un circuit relié à la marche arrière du véhicule. Une façon simple de réaliser ce mode de réalisation est, par exemple, de connecter ce circuit sur un circuit des feux arrière du véhicule de sorte que, lorsque la marche arrière est enclenchée, un courant électrique commande l'allumage des feux arrière, et de manière concomitante, commande la rotation de la caméra 41, de sa position basse à sa position haute.

En outre, entre la position basse et la position haute de la caméra 41, la distance limite d_{L} de la zone observée par rapport à l'arrière 3 du véhicule 2 est multipliée par 3, ce coefficient multiplicateur étant de préférence au moins supérieur à 2, et de préférence encore, supérieur ou égale à 3.

Un tel dispositif de vision arrière 1 permet ainsi, de pouvoir :
- toujours observer une zone proche du véhicule 2 quelque soit la vitesse enclenchée par le conducteur, assez proche du véhicule 2 pour observer si une personne s'y trouve, et ce, quelque soit la manoeuvre du véhicule 2 en cours ; et
- lors de manoeuvre de recul du véhicule 2, de pouvoir observer une zone éloignée, assez éloignée pour garantir la sécurité de ses collègues travaillant derrière le véhicule 2.

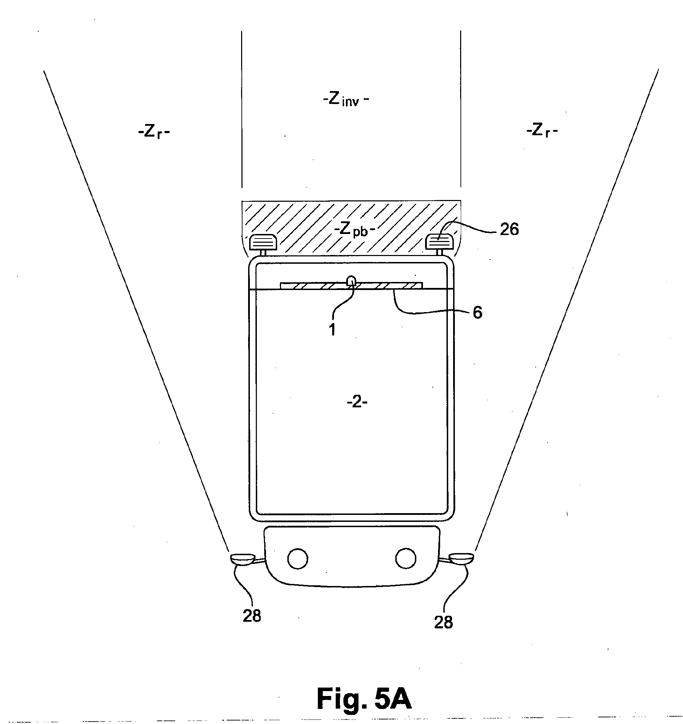

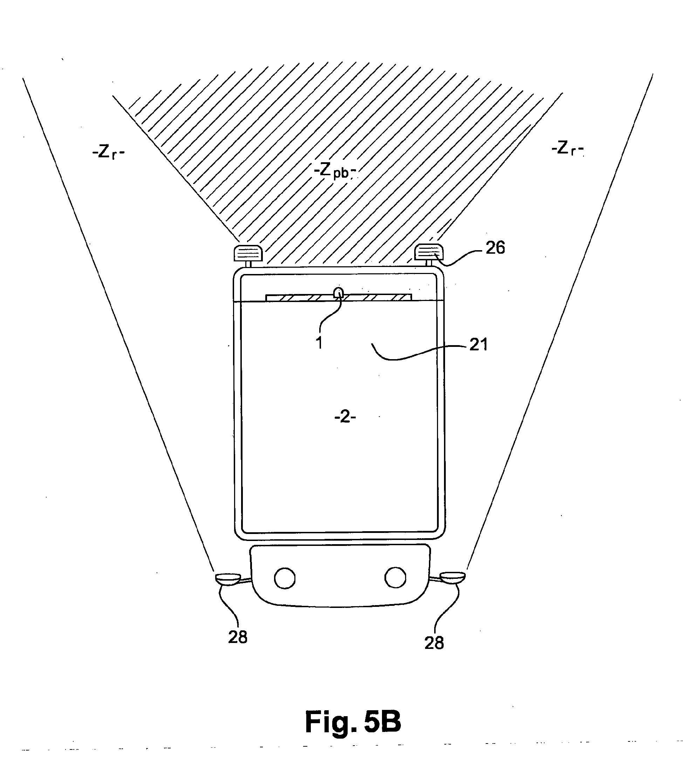

Les figures 5A et 5B illustrent quant à elles des vues de dessus d'un véhicule de type camion, lequel est muni d'un dispositif de vision arrière 1 selon ce même mode de réalisation, le moyen d'observation 4 étant dans une position basse (figure 5A) et dans une position haute (figure 5B).

Ces figurent illustrent le même véhicule 2 muni du dispositif de vision arrière 1 selon le même mode de réalisation que celui illustré figure 1, 2A, 2B, 4A et 4B.

Dans ces vues de dessus sont représentées, en plus des zones Zpb, Zph couvertes par la caméra 41 en positions basse et haute :
- des zones Zr couvertes par les rétroviseurs 28 du véhicule 2 et ;
- une zone Zinv, qui est une zone d'invisibilité ou angle mort, c'est à dire que le conducteur ne peut pas observer cette zone, celle ci n'étant ni couverte par la caméra, ni couverte par les moyens d'observations habituels tels que les rétroviseurs.

Dans ces figures, ces zones ont été délimitées par des traits sensiblement continus, les zones Zpb, Zph couvertes par la caméra 41 en positions basse et haute ayant été hachurées.

En termes de fonctionnement, le procédé de fonctionnement est le suivant :
- lors du passage de la marche arrière, le support 6, et donc l'ensemble formé par la caméra 41 et les éclairages 7, se pivote et se relève d'environ 30 degrés augmentant ainsi considérablement la zone couverte par la caméra.
- dès que le chauffeur repasse la marche avant (ou se met au point mort) le vérin se rétracte et ainsi la caméra 41 se retrouve en position travail.

Dans ce mode de réalisation l'allumage de la caméra peut être commandé par l'allumage des feux du véhicule ou par un allumage manuel du conducteur.

Un tel dispositif de vision arrière 1 permet ainsi de répondre efficacement au problème de vision arrière de ces véhicules de type poids-lourd, et en particulier pour permettre au moins en marche arrière une vision élargie, précise et complète de l'environnement à l'arrière du véhicule par son conducteur, ceci afin d'assurer la sécurité des personnes situées à proximité quelque soient les manoeuvres effectuées par le véhicule.

En outre, un tel dispositif permet une installation sur des véhicules préexistants et simplement sans nécessiter de nouvelles caméras ou de nouveaux écrans de contrôle dans la cabine. L'articulation de la caméra et ses moyens de commande associés peuvent en effet être installés postérieurement à la fabrication du véhicule.

L'invention est décrite dans ce qui précède à titre d'exemple. Il est entendu que l'homme du métier est à même de réaliser différentes variantes de réalisation de l'invention sans pour autant sortir du cadre de l'invention.

Ainsi, la caméra 41 pourra être disposée à un autre endroit tout en assurant la même fonction. Par exemple, la caméra 41 peut être placée sous la plaque d'immatriculation ou bien au dessus, le principe de fonctionnement restant le même. Dans ce cas, le dispositif de vision arrière est agencé pour que l'angle de rotation de la caméra 41 entre sa position basse et sa position haute soit plus important lorsque ladite caméra est positionnée à une telle hauteur basse du sol, à savoir au niveau de la plaque d'immatriculation, que lorsqu'elle est positionnée à une hauteur haute telle qu'illustrée sur les figures. A l'inverse, plus le moyen d'observation sera positionné haut, et plus l'angle de rotation est faible pour observer une même zone d'observation. En effet, les proportions varient selon la hauteur de fixation du dispositif de vision arrière 1 par application du théorème de Pythagore, cela permettant de définir la distance d_{L} en fonction ladite hauteur de fixation du système et de l'angle formé entre la caméra 41 et un axe vertical, de façon absolue, ou bien de l'angle de rotation entre la position basse et la position haute, de façon relative.

On pourra par exemple prévoir une caméra de type grand angle pour une utilisation comme moyen d'observation d'un tel dispositif de vision arrière.

Par ailleurs, le circuit apte à être relié à la marche arrière pour commander les moyens de déplacement, peut également être couplé à la mise sous tension d'un autre équipement du véhicule.

Les éclairages peuvent aussi être alimentés de façon indépendante par un circuit autre que celui relié à la marche arrière, en particulier à une mise sous tension d'un autre équipement du véhicule. Il peut s'agir par exemple d'un système de compaction dans le cas d'un véhicule présentant une benne et destiné au ramassage des déchets ménagers. Cela est particulièrement avantageux pour ce type de véhicule présentant une benne. En effet, au-delà d'une certaine vitesse en marche avant, un équipement tel qu'un système de compaction est automatiquement mis hors tension, généralement au-delà d'une certaine vitesse seuil de 40 km/h. Cela permet notamment de s'assurer que les éclairages seront bien éteints au-delà de cette vitesse en marche avant afin de respecter le code de la route.

## Revendications

1. Véhicule (2) du type camion, notamment un camion pour le ramassage d'ordures ménagères, comprenant un dispositif de vision arrière (1) disposé à l'arrière (3) du véhicule (2), le dispositif de vision arrière (1) comprenant au moins un moyen d'observation (4) le véhicule (2) étant **caractérisé en ce qu'**il comprend des moyens de déplacement (5) du moyen d'observation (4) entre une position basse et une position haute :
- la position basse où le moyen d'observation (4) est orienté vers le bas ;
- la position haute commandée par un circuit relié à une marche arrière du véhicule (2), la position haute correspondant à une position dans laquelle le moyen d'observation (4) est orienté plus haut que la position basse.

2. Véhicule (2) selon la revendication 1, **caractérisé en ce que** les moyens d'observation (4) comprennent une caméra (41) et un écran.

3. Véhicule (2) selon la revendication 1 ou 2, **caractérisé en ce que** les moyens de déplacement (5) comprennent au moins un vérin (51).

4. Véhicule (2) selon l'une quelconque des revendications précédentes, **caractérisé en ce que** le dispositif de vision arrière (1) comprend un support (6), les moyens de déplacement (5) permettant le déplacement dudit support (6) sur lequel est fixé le moyen d'observation (4).

5. Véhicule (2) selon la revendication 4, **caractérisé en ce que** le dispositif de vision arrière (1) présente au moins un éclairage (7) disposé sur le support (6) de sorte que les moyens de déplacement (5) permettent le déplacement concomitant du moyen d'observation (4) et de l'éclairage (7).

6. Véhicule (2) selon l'une quelconque des revendications précédentes, **caractérisé en ce que** les moyens de déplacement (5) permettent la rotation horizontale du moyen d'observation (4) par rapport au véhicule (2).

7. Véhicule (2) selon l'une quelconque des revendications précédentes, **caractérisé en ce que** la position haute du moyen d'observation (4) permet d'observer une région arrière du véhicule éloignée d'au moins 2m.

8. Véhicule (2) selon l'une quelconque des revendications précédentes, **caractérisé en ce qu'**il comprend une benne (21) située à l'arrière (3) du véhicule (2), le dispositif de vision arrière (1) étant fixé à la benne (21) de sorte que le moyen d'observation (4) est situé à l'arrière (3) de la benne (21) ou au dessus de la benne (21).

9. Véhicule selon l'une quelconque des revendications précédentes, **caractérisé en ce qu'**il comprend un écran pour l'utilisateur, le conducteur.

10. Véhicule selon l'une quelconque des revendications 1 à 8, **caractérisé en ce qu'**il comprend un écran et deux caméras (41).

## Patentansprüche

1. Fahrzeug (2) des Typs Lastkraftwagen, insbesondere Lastkraftwagen zum Sammeln von Hausmüll, das eine Vorrichtung zum Rückwärtssehen (1) umfasst, die an der Rückseite (3) des Fahrzeugs (2) angeordnet ist, wobei die Vorrichtung zum Rückwärtssehen (1) mindestens ein Beobachtungsmittel (4) umfasst, wobei das Fahrzeug (2) **dadurch gekennzeichnet ist, dass** es Mittel zum Bewegen (5) des Beobachtungsmittels (4) zwischen einer Tiefstellung und einer Hochstellung umfasst:
- Tiefstellung, in der das Beobachtungsmittel (4) nach unten gerichtet ist;
- Hochstellung, die von einem Schaltkreis gesteuert ist, der mit einem Rückwärtsgang des Fahrzeugs (2) verbunden ist, wobei die Hochstellung einer Position entspricht, in der das Beobachtungsmittel (4) höher ausgerichtet ist als die Tiefstellung.

2. Fahrzeug (2) nach Anspruch 1, **dadurch gekennzeichnet, dass** die Beobachtungsmittel (4) eine Kamera (41) und einen Bildschirm umfassen.

3. Fahrzeug (2) nach Anspruch 1 oder 2, **dadurch gekennzeichnet, dass** die Bewegungsmittel (5) mindestens einen Zylinder (51) umfassen.

4. Fahrzeug (2) nach einem der vorhergehenden Ansprüche, **dadurch gekennzeichnet, dass** die Vorrichtung zum Rückwärtssehen (1) einen Träger (6), Bewegungsmittel (5), die das Bewegen des Trägers (6), auf dem das Beobachtungsmittel (4) befestigt ist, erlauben, umfasst.

5. Fahrzeug (2) nach Anspruch 4, **dadurch gekennzeichnet, dass** die Vorrichtung zum Rückwärtssehen (1) mindestens eine Beleuchtung (7) aufweist, die auf dem Träger (6) derart angeordnet ist, dass die Bewegungsmittel (5) das gleichzeitige Bewegen des Beobachtungsmittels (4) und der Beleuchtung (7) erlauben.

6. Fahrzeug (2) nach einem der vorhergehenden Ansprüche, **dadurch gekennzeichnet, dass** die Bewegungsmittel (5) die horizontale Drehung des Beobachtungsmittels (4) in Bezug auf das Fahrzeug (2) erlauben.

7. Fahrzeug (2) nach einem der vorhergehenden Ansprüche, **dadurch gekennzeichnet, dass** die Hochstellung des Beobachtungsmittels (4) das Beobachten eines hinteren Bereichs des Fahrzeugs, der um mindestens 2 m entfernt ist, erlaubt.

8. Fahrzeug (2) nach einem der vorhergehenden Ansprüche, **dadurch gekennzeichnet, dass** es einen Kübel (21) umfasst, der sich an der Rückseite (3) des Fahrzeugs (2) befindet, wobei die Vorrichtung zum Rückwärtssehen (1) an dem Kübel (21) derart befestigt ist, dass das Beobachtungsmittel (4) an der Rückseite (3) des Kübels (21) oder oberhalb des Kübels (21) liegt.

9. Fahrzeug nach einem der vorhergehenden Ansprüche, **dadurch gekennzeichnet, dass** es einen Bildschirm für den Benutzer, den Fahrer umfasst.

10. Fahrzeug nach einem der Ansprüche 1 bis 8, **dadurch gekennzeichnet, dass** es einen Bildschirm und zwei Kameras (41) umfasst.

## Claims

1. Vehicle (2) of the lorry type, notably a lorry for picking up household refuse, comprising a rear-view device (1) arranged at the rear (3) of the vehicle (2), the rear-view device (1) comprising at least one observation means (4), the vehicle being **characterized in that** it comprises movement means (5) for moving the observation means (4) between a low position and a high position:
- the low position in which the observation means (4) is angled downwards;
- the high position controlled by a circuit connected to the vehicle (2) reversing, the high position corresponding to a position in which the observation means (4) is oriented higher up than the low position.

2. Vehicle (2) according to Claim 1, **characterized in that** the observation means (4) comprise a camera (41) and a screen.

3. Vehicle (2) according to Claim 1 or 2, **characterized in that** the movement means (5) comprise at least an actuating cylinder (51).

4. Vehicle (2) according to any one of the preceding claims, **characterized in that** the rear-view device (1) comprises a support (6), the movement means (5) allowing the said support (6) on which the observation means (4) is fixed to be moved.

5. Vehicle (2) according to Claim 4, **characterized in that** the rear-view device (1) has at least one lighting (7) arranged on the support (6) so that the movement means (5) allow the observation means (4) and the lighting (7) to be moved at the same time.

6. Vehicle (2) according to any one of the preceding claims, **characterized in that** the movement means (5) allow the observation means (4) to be rotated horizontally with respect to the vehicle (2).

7. Vehicle (2) according to any one of the preceding claims, **characterized in that** the high position of the observation means (4) allows a rear region of the vehicle situated at least 2 m away to be observed.

8. Vehicle (2) according to any one of the preceding claims, **characterized in that** it comprises a skip body (21) situated at the rear (3) of the vehicle (2), the rear-view device (1) being fixed to the skip body (21) so that the observation means (4) is situated at the rear (3) of the skip body (21) or above the skip body (21).

9. Vehicle according to any one of the preceding claims, **characterized in that** it comprises a screen for the user, the driver.

10. Vehicle according to any one of Claims 1 to 8, **characterized in that** it comprises a screen and two cameras (41).
